# FASCICULE DE BREVET EUROPEEN

(11) **EP 3 910 739 B1**
(45) Date de publication et mention de la délivrance du brevet: **01.07.2026**
(21) Numéro de dépôt: 21173621.0
(22) Date de dépôt: 12.05.2021
(51) Int. Cl.: H01Q 11/08, H01Q 1/08, H01Q 1/28, H01Q 1/12, B64G 1/22

(54) **ANTENNE RADIOFRÉQUENCE AUTO-DÉPLOYABLE**
AUTOMATISCH AUSKLAPPBARE FUNKFREQUENZANTENNE
AUTO-DEPLOYABLE RADIOFREQUENCY ANTENNA

(30) Priorité: 15.05.2020 FR 2004864
(43) Date de publication de la demande: 17.11.2021
(73) Titulaire: COMAT, 31130 Flourens (FR)
(72) Inventeur: PIRES, Victor, 31140 SAINT-LOUP-CAMMAS (FR); FERNANDEZ, Bastien, 31570 SAINTE-FOY-D'AIGREFEUILLE (FR); BRUNO, Dominique, 31130 BALMA (FR)
(74) Mandataire: BARRE LAFORGUE

(56) Documents cités:
- FR-A1- 3 081 841
- JP-B2- 3 649 516
- US-A- 3 913 109
- US-A- 5 977 932

## Description

### Domaine technique

L'invention concerne le domaine des antennes radiofréquence auto-déployables, plus particulièrement pour le domaine spatial.

### Technique antérieure

Il est connu d'équiper un satellite ou une station spatiale d'une antenne radiofréquence afin de lui permettre de communiquer avec la terre. Compte tenu des fréquences utilisées, une telle antenne radiofréquence présente une extension longitudinale de l'ordre de quelques dizaines de centimètres selon une direction sensiblement normale à la surface du satellite. Aussi, selon un mode de réalisation, une telle antenne est avantageusement repliée ou gerbée afin de présenter une extension la plus réduite possible pendant le transport. Elle est ensuite déployée, une fois le satellite sur son orbite. Aussi, il est recherché une antenne radiofréquence pouvant être gerbée et ensuite déployée.

On connaît de FR 3 081 841 A1 une structure téléscopique déployable comprenant des segments s'emboitant les uns dans les autres, des pattes portant des brins d'antenne ou des fils ou câbles de liaison à un appareil porté par un mât. Le mât est déployable sous l'action d'un tube gonflable logé à l'intérieur des segments.

On connaît de JP 3 649516 B2 une antenne hélicoïdale extensible comprenant une base cylindrique à partir de laquelle s'étend le corps principal de l'antenne jusqu'à une extrémité en forme de disque, le corps principal comprenant quatre câbles enroulés et des espaceurs connectés aux câbles de section circulaire.

On connaît de US 5 977 932 A une antenne formée de bandes élastiques hélicoïdales, de bandes conductrices, d'anneaux d'extrémités auxquels sont attachés chaque bande élastique hélicoïdale, et d'anneaux intermédiaires permettant de maintenir la forme hélicoïdale de l'antenne dans sa configuration étendue. L'antenne peut être enroulée ou déformée afin de présenter un encombrement réduit.

On connaît de US 3 913 109 A un mât déployable comprenant des segments annulaires et au moins deux bandes flexibles attachés aux extrémités du mât.

### Résumé de l'invention

Pour cela, l'invention a pour objet une antenne radiofréquence selon la revendication 1. En particulier, l'invention a pour objet une antenne radiofréquence sensiblement cylindrique selon un axe avec au moins un élément rayonnant, comprenant une configuration gerbée présentant une extension réduite selon l'axe du cylindre et une configuration déployée présentant une extension augmentée selon l'axe du cylindre, ladite antenne étant apte à se déployer spontanément pour passer de la configuration gerbée à la configuration déployée, et comprenant au moins deux bagues sensiblement toriques coaxiaux, le grand diamètre du tore définissant le diamètre du cylindre, superposées, les axes desdits au moins deux bagues toriques se confondant chacun avec l'axe du cylindre, alors que deux bagues toriques adjacentes étant en contact dans la configuration gerbée de l'antenne, ainsi qu'au moins une lame élastiquement flexible fixée sensiblement à la périphérie extérieure desdites au moins deux bagues, dans lequel ladite au moins une lame est conformée pour, en configuration déployée, s'étendre le long du cylindre selon un axe parallèle ou confondu avec l'axe du cylindre et, en configuration gerbée, se replier sur elle-même sous contrainte, de manière à créer un effort de rappel, permettant le déploiement spontané et en ce que chaque bague présente un diamètre sensiblement identique en configuration gerbée et en configuration déployée, lorsque l'antenne est repliée en configuration gerbée, en configuration déployée, ladite au moins une lame est contrainte sensiblement continûnement et est disposée à l'intérieur du cylindre.

Des caractéristiques ou des modes de réalisation particuliers, utilisables seuls ou en combinaison, sont :
- ladite au moins une lame forme l'élément rayonnant de l'antenne radiofréquence,
- une lame présente une section continue de forme incurvée et de concavité tournée vers l'intérieur du cylindre, afin d'assurer un auto-maintien dynamique de la configuration déployée,
- une lame présente une section discontinue ou interrompue de telle sorte que, lorsqu'elle est piégée entre deux surfaces parallèles la comprimant, elle se déforme jusqu'à ce qu'elle atteigne une configuration plate,
- une lame est réalisée monobloc depuis la première bague jusqu'à la dernière bague, sur toute la longueur du cylindre,
   régulièrement réparties angulairement, encore préférentiellement quatre lames,
- une bague comprend sur une première surface au moins un ergot sensiblement cylindrique d'axe sensiblement parallèle à l'axe du cylindre et, sur une deuxième surface opposée à la première surface, au moins autant de logements sensiblement cylindriques ou préférentiellement coniques, d'axe sensiblement parallèle à l'axe du cylindre, chaque logement étant apte à accueillir un ergot de la bague immédiatement voisine et en regard,
- une bague comprend encore au moins une partie amincie selon une direction radiale, afin de permettre une déformation élastique de la bague,
- une bague présente, au droit de la fixation avec une lame, une section sensiblement hémicylindrique, sensiblement tangente au cylindre par l'intérieur et d'axe sensiblement perpendiculaire à l'axe du cylindre, de manière à guider la lame lors de son repliement,
- une fixation bague / lame comprend un moyen anti-glissement, préférentiellement du type par pincement,
- lesdites au moins deux bagues sont en matériau diélectrique, préférentiellement un matériau plastique, encore préférentiellement du PEEK, et ladite au moins une lame est en matériau électriquement conducteur, préférentiellement un métal.

Par ailleurs, l'invention a également pour objet un engin spatial comprenant une telle antenne radiofréquence.

L'invention concerne également une antenne et un engin spatial caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

### Brève description des dessins

L'invention sera mieux comprise à la lecture de la description qui suit, faite uniquement à titre d'exemple, et en référence aux figures en annexe dans lesquelles :
La figure 1 illustre une antenne dans une première mise en œuvre de la configuration déployée,
La figure 2 illustre une antenne dans une deuxième mise en œuvre de la configuration déployée,
La figure 3 illustre une antenne en configuration gerbée,
La figure 4 illustre une bague seule,
La figure 5 illustre une bague et ses interfaces avec les lames,
La figure 6 illustre la section d'une bague à l'interface avec une lame déployée,
La figure 7 illustre une lame repliée,
La figure 8 illustre une première mise en œuvre de la section d'une lame.
La figure 9 illustre une deuxième mise en œuvre de la section d'une lame.

### Description des modes de réalisation

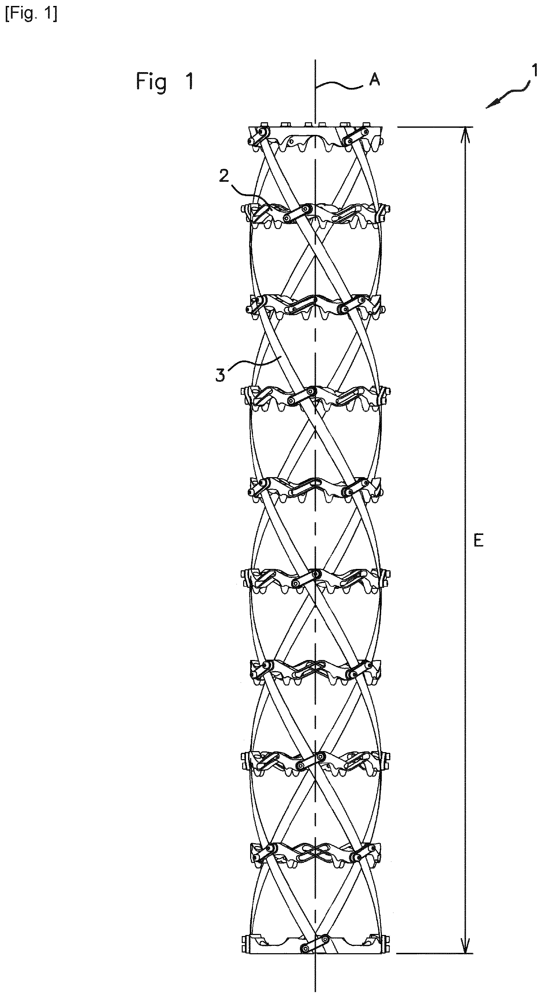

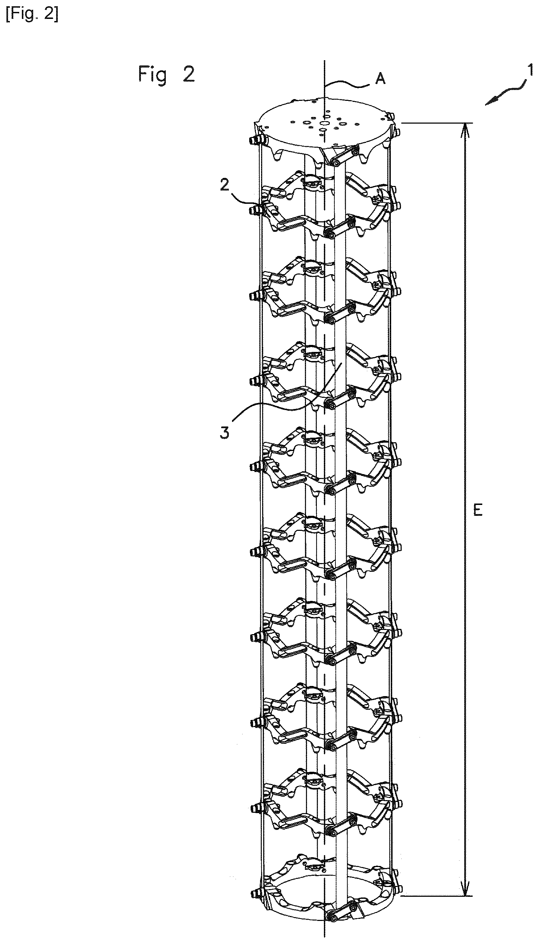

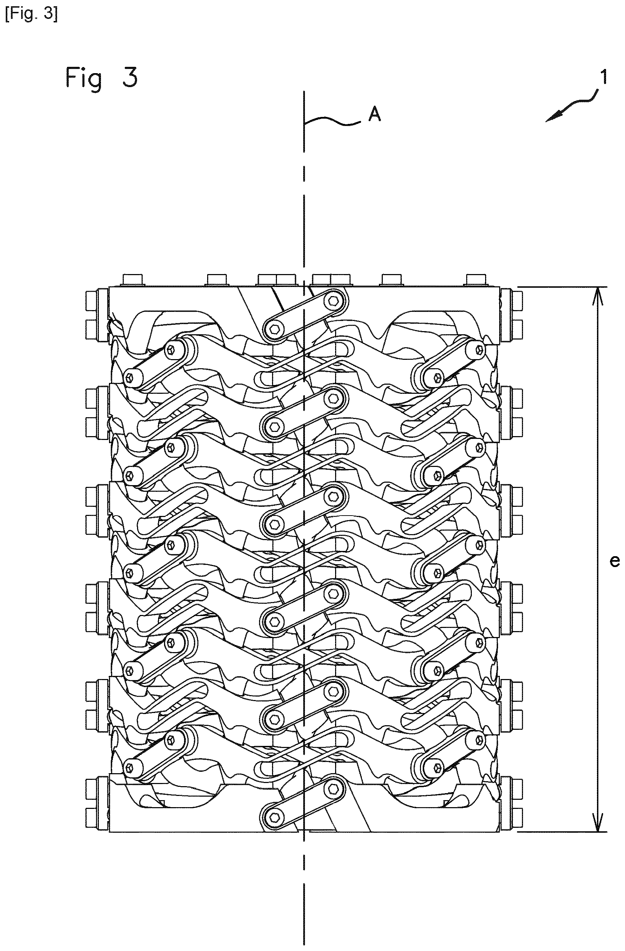

En référence aux figures 1, 2 et 3, l'invention concerne une antenne radiofréquence 1 sensiblement cylindrique selon un axe A. Cette antenne radiofréquence 1 peut être dans au moins deux configurations : une configuration gerbée, illustrée à la figure 3, présentant une extension réduite e selon l'axe A du cylindre et une configuration déployée, illustrée aux figures 1 et 2, présentant une extension augmentée E selon l'axe A du cylindre. La configuration déployée est stable, comme décrite plus loin. Au contraire, la configuration gerbée est instable et l'antenne radiofréquence 1 tend, spontanément, à se déployer pour passer de la configuration gerbée à la configuration déployée.

Pour cela, l'antenne radiofréquence 1, comprend au moins deux bagues 2 de forme sensiblement torique. Le grand diamètre du tore définit le diamètre du cylindre. Les bagues 2 sont superposées, à « plat », de sorte que les axes des tores soient confondus (c'est-à-dire colinéaires) entre eux et avec l'axe A du cylindre. L'antenne radiofréquence 1 comprend encore au moins une lame 3 élastiquement flexible.

Ainsi, l'antenne radiofréquence 1 peut comprendre une, deux, trois ou plus de lames 3 élastiquement flexible. Cette au moins une lame 3 présente sensiblement une forme de ruban ou de bande mince (c'est-à-dire présentant une section transversale non symétrique en rotation autour d'un axe longitudinal selon lequel s'étend ladite lame, à la différence d'un fil ou d'un câble par exemple). Elle est fixée sensiblement à la périphérie extérieure desdites au moins deux bagues 2.

Selon une caractéristique importante, ladite au moins une lame 3 est réalisée en un matériau élastique. Elle est conformée pour présenter une forme par défaut correspondant à la configuration déployée. Ainsi, la configuration déployée est une configuration d'équilibre, une configuration de repos, une configuration par défaut, vers laquelle l'antenne 1 tend à revenir spontanément.

Par ailleurs, le matériau élastique utilisé pour réaliser ladite au moins une lame 3, est choisi de manière à lui permettre de se tenir toute seule en configuration déployée. Dans une mise en œuvre particulière, chaque lame 3 est conformée pour se tenir toute seule en configuration déployée. Dans une autre mise en œuvre particulière, au moins une lame 3 est conformée pour se tenir toute seule en configuration déployée.

En configuration déployée, ladite au moins une lame 3 présente une forme droite ou en hélice.

Dans sa forme droite, comme illustré sur la figure 2, ladite au moins une lame 3 s'étend le long du cylindre selon un axe parallèle à l'axe A du cylindre.

Dans sa forme en hélice, comme illustré sur la figure 1, ladite au moins une lame 3 s'enroule autour du cylindre. Dans ce cas, l'axe de cette hélice est confondu avec l'axe A du cylindre.

L'hélice peut indifféremment être une hélice à gauche ou une hélice à droite. Avantageusement, en cas de pluralité de lames 3, toutes les lames 3 s'enroulent dans le même sens.

Au contraire, en configuration gerbée, ladite au moins une lame 3 est repliée sur elle-même. Ladite au moins une lame 3 étant élastique, ce repliement s'effectue de manière contrainte, et crée un effort de rappel. Aussi, la configuration gerbée est instable et sous l'effet dudit effort de rappel, l'antenne radiofréquence 1, lorsqu'elle est laissée libre, se déploie spontanément pour rejoindre la configuration déployée.

L'antenne radiofréquence 1 est donc également sensiblement cylindrique selon un axe A en configuration déployée et en configuration gerbée, et le diamètre du cylindre correspond au diamètre des bagues 2, comme on peut le voir sur les figures 1 à 5.

Aussi, l'antenne radiofréquence 1 comprend avantageusement un moyen de maintien en position gerbée. Un tel moyen peut, par exemple, comprendre une tige axiale selon l'axe A solidarisant une bague extrémale avec l'autre bague extrémale. Ce moyen peut être libéré lorsqu'un déploiement est souhaité. La libération peut être réalisée par tout actionneur apte à libérer le moyen de maintien.

Dans un exemple, une lame 3 présente une largeur comprise entre 2mm et 100mm, et notamment une largeur comprise entre 10mm et 80mm. Dans un autre exemple, que l'on peut combiner avec l'exemple précédent, une lame 3 présente une épaisseur comprise entre 0,05mm et 1mm.

Dans une mise en œuvre particulière, l'antenne radiofréquence 1 telle que décrit permet avantageusement d'obtenir un rapport de gerbage E/e au moins égal à 2, voire au moins égale à 3, voire au moins égal à 4. Par exemple, pour une longueur de 20 cm en configuration gerbée, on peut obtenir au moins une longueur de 40 cm en configuration déployée. Ledit rapport de gerbage correspond au rapport de la longueur de l'antenne en configuration déployée sur la longueur de l'antenne en configuration gerbée.

Une antenne telle que représentée aux figures 1 à 3 comprenant 10 bagues et quatre lames présentant chacune une largeur de l'ordre de 12mm peut par exemple présenter un diamètre de l'ordre de 100mm (c'est-à-dire le diamètre de chaque bague étant de l'ordre de 100mm et le diamètre du cylindre formé par l'antenne en position gerbée comme en position déployée), un pas de l'ordre de 1000mm et l'antenne présentant une longueur de l'ordre de 60 cm en configuration déployée pour une longueur de l'ordre de 15 cm seulement en configuration gerbée. Une telle antenne présente une excellente stabilité structurelle et une excellente résistance aux sollicitations (transverses notamment).

Une antenne selon l'invention peut bien sûr présenter des dimensions distinctes selon les applications et les contraintes à respecter. Il est par exemple également possible de prévoir une antenne comprenant également 10 bagues et quatre lames dans laquelle chaque lame présente une largeur de l'ordre de 50mm. Une telle antenne présente par exemple, par homothétie au moins partielle avec l'antenne précédente en ce qui concerne le diamètre et la longueur de l'antenne, un diamètre de l'ordre de 300mm (c'est-à-dire le diamètre de chaque bague étant de l'ordre de 300mm et donc le diamètre du cylindre formé par l'antenne en position gerbée comme en position déployée), un pas de l'ordre de 1800mm et l'antenne présentant une longueur de l'ordre de 190 cm en configuration déployée pour une longueur de l'ordre de 45 cm seulement en configuration gerbée. Une telle antenne présente une stabilité structurelle et une résistance aux sollicitations améliorées par rapport à l'antenne précédente, liées en particulier à la largeur des lames.

L'antenne comprend au moins un élément rayonnant adapté pour rayonner des ondes électromagnétiques. Ledit élément rayonnant peut prendre diverses formes, il peut s'agir des lames 3 elles-mêmes et/ou d'un élément rayonnant distinct des lames 3 tel que des fils ou câbles fixés à ladite antenne, par exemple fixé à au moins une bague et/ou fixé à au moins une lame. Selon une autre caractéristique, ladite au moins une lame 3 forme avantageusement l'élément rayonnant de l'antenne radiofréquence 1. Pour cela, ladite au moins une lame 3 est réalisée en un matériau électriquement conducteur se confondant avec le matériau offrant l'élasticité. Alternativement, ladite au moins une lame 3 comprend un premier matériau assurant l'élasticité, associé, par exemple par recouvrement, d'un deuxième matériau assurant la conduction électrique.

De plus, les lames 3 sont avantageusement reliées électriquement entre elles, avantageusement par une connexion en court-circuit, par exemple au niveau de l'extrémité distale. Au moins une des lames 3 est encore avantageusement connectée, typiquement par un câble coaxial, à un équipement radiofréquence émetteur et/ou récepteur, préférentiellement au niveau de l'extrémité proximale et/ou distale.

Il a été vu que ladite au moins une lame 3 est élastiquement flexible. Aussi lorsqu'elle est déformée pour être repliée de sorte que l'antenne radiofréquence 1 soit en configuration gerbée, une lame 3 subit une contrainte. Comme vu précédemment, la libération de cette contrainte permet le déploiement spontané de l'antenne 1.

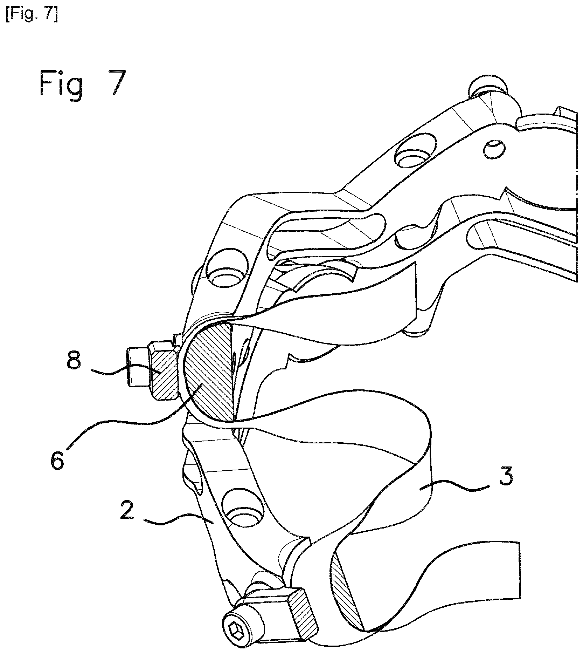

Selon une autre caractéristique, lorsqu'une lame 3 est repliée, ladite contrainte est sensiblement continue. Ceci est rendu possible par un enroulement de la lame 3 sur elle-même avec un rayon de courbure sensiblement constant ou du moins sensiblement continûment varié. La figure 7 illustre le détail d'une lame repliée. Ce repliement est réalisé par enroulement souple, sans pli brutal, avec une courbure globalement la plus faible possible, telle que spontanément obtenue par un rapprochement de deux bagues 2 successives. La lame 3 est encore disposée à l'intérieur du cylindre, telle qu'illustré à la figure 7. Lors d'un repliement, il peut être nécessaire d'aider une lame 3 à se replier en la guidant vers l'intérieur du cylindre. Tous les tronçons de lame 3 entre deux bagues 2 sont repliés de manière identique. Ceci assure une symétrie axiale des efforts lors du déploiement.

Il a été vu qu'une lame 3 est élastique et conformée pour que sa forme par défaut corresponde à la configuration déployée. Aussi, l'élasticité de ladite au moins une lame 3 garantit, en plus d'un déploiement spontané, un maintien en configuration déployée et ce de manière dynamique. Ainsi si une sollicitation déforme l'antenne radiofréquence 1 et l'éloigne de la configuration déployée, l'élasticité de ladite au moins une lame 3 tend à l'y ramener. Ceci est vrai pour toute sollicitation : axiale, de flexion, en torsion, etc. Aussi, cette élasticité, réalise un auto-verrouillage en configuration déployée.

La flexibilité d'une lame 3 s'accompagne encore d'un amortissement. Aussi, lors d'un retour à la configuration déployée à la suite d'une sollicitation déformante, les oscillations sont naturellement amorties. Ceci est particulièrement avantageux pour une utilisation spatiale.

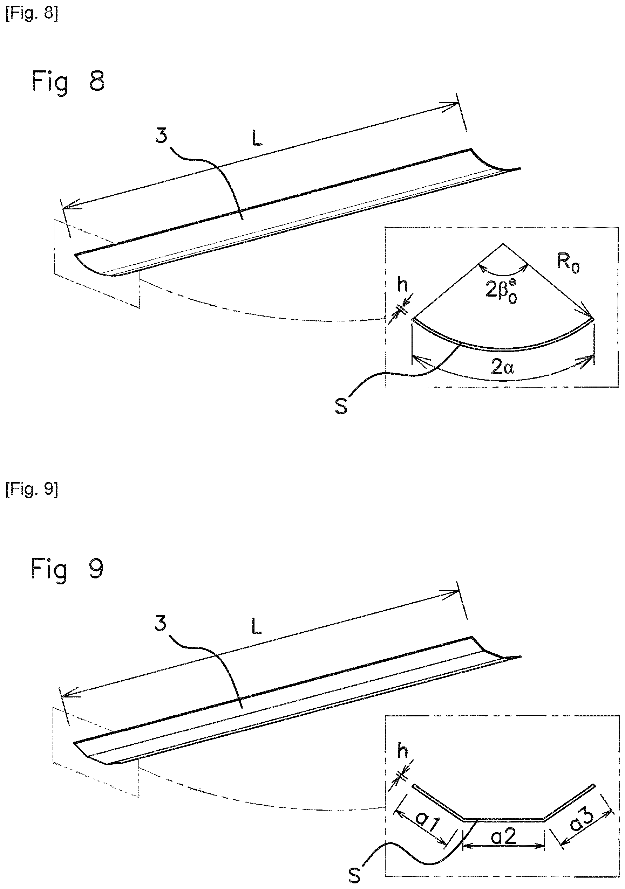

Afin d'augmenter l'élasticité, qui assure tant le déploiement spontané que l'auto-verrouillage dynamique, selon une autre caractéristique, plus particulièrement illustrée à la figure 8, ladite au moins une lame 3 présente une section S continue transverse de forme incurvée. En d'autres termes, ladite au moins une lame 3 est cintrée (tuilée) autour d'un axe longitudinal de ladite au moins une lame 3. Avantageusement, la concavité ainsi créée est tournée vers l'intérieur du cylindre. Toutefois, dans une mise en œuvre particulière, la concavité est tournée vers l'extérieur du cylindre. Avantageusement encore, le profil de section S est symétrique. Ainsi la raideur de ladite au moins une lame 3 est augmentée et avec elles les efforts de rappel de déploiement et/ou d'auto-verrouillage. La dynamique de déploiement de l'antenne ainsi que la rigidité et la stabilité de l'antenne en configuration déployée sont ainsi améliorées par rapport à une antenne dont les lames 3 ne sont pas tuilées.

Dans un exemple, le rayon de courbure R₀ de la section S de lame 3 est compris entre 1mm et 100mm.

Dans une autre mise en œuvre particulière, illustré sur la figure 9, ladite au moins une lame 3 présente une section S discontinue ou interrompue de telle sorte que, lorsqu'elle est piégée entre deux surfaces parallèles la comprimant, elle se déforme jusqu'à ce qu'elle atteigne une configuration plate. La discontinuité de la section S illustrée en figure 9 est une discontinuité apparente correspondant ici à une rupture de courbe ou de sorte que la section transversale de la lame présente plusieurs portions rectilignes non colinéaires entre elles.

Dans l'exemple de la figure 9, la section S de la lame 3 présente une forme de vase constitué de trois morceaux a₁, a₂ et a₃, avec un fond a₂ et deux parois a₁ et a₃. Toutefois, la section S de la lame 3 peut comprendre un ou plusieurs morceaux qui peuvent êtres droits ou courbes. Par exemple, la section S de la lame 3 peut présenter une forme en V constitué de deux morceaux.

Selon une autre caractéristique, une lame 3 est réalisée monobloc depuis la première bague jusqu'à la dernière bague, sur toute la longueur du cylindre.

Toutefois, dans une mise en œuvre particulière, une lame 3 comprend une pluralité de tronçons de lame depuis la première bague jusqu'à la dernière bague, sur toute la longueur du cylindre. Par exemple, une lame 3 peut comprendre un tronçon de lame entre chaque couple adjacent de bague 2. Dans cette mise en œuvre particulière, les tronçons de lame d'une lame 3 sont électriquement connectés entre eux de manière à assurer une continuité électrique depuis la première bague jusqu'à la dernière bague. Cet agencement est avantageux lorsque l'on souhaite réaliser une antenne radiofréquence 1 de grande dimension, car on pourra utiliser deux ou plusieurs tronçons de lame pour former une lame 3.

Il a été décrit précédemment une antenne radiofréquence 1, dont le nombre de lames 3 est au moins égal à un. Il est en effet possible de réaliser une telle antenne radiofréquence 1 avec une unique lame 3.

Il est encore possible d'augmenter le nombre de lames 3. Ainsi les figures illustrent un nombre de lames 3 préféré de quatre. Ainsi, sous réserve de compatibilité radiofréquence, rien ne s'oppose, que ce soit pour augmenter la raideur de déploiement, ou pour augmenter la surface et/ou le volume/poids de lames, à une augmentation de ce nombre jusqu'à dix, ou encore vingt lames.

Selon une autre caractéristique, dans le cas d'une pluralité de lames 3, celles-ci sont avantageusement régulièrement réparties angulairement. Une telle caractéristique permet d'obtenir une symétrie des efforts, garante d'un déploiement axialement équilibré.

Lorsque, en configuration déployée, une lame 3 présente une forme en hélice, son pas d'hélice est compris, par exemple, entre 10 mm/tour et 5 m/tour. En cas de pluralité de lames 3, toutes les lames 3 présentent avantageusement un même pas d'hélice.

Le pas d'hélice d'une lame 3 peut encore être modifié pour augmenter ou diminuer la surface de la lame 3.

En fonction du nombre de lames 3 et des caractéristiques radiofréquences que l'on souhaite donner à l'antenne radiofréquence 1, il peut être nécessaire de modifier le pas d'hélice.

Une antenne radiofréquence 1 comprend un nombre quelconque de bagues 2. Ce nombre est au minimum égal à deux et est raisonnablement limité à vingt. Les deux bagues extrémales peuvent être légèrement différentes. Ceci est dû, d'une part, au fait qu'elles ne possèdent pas de bague voisine d'un côté et donc n'ont pas à comprendre les éléments d'interface avec une bague 2 voisine. Ceci peut encore être dû, d'autre part, au fait qu'elles assurent éventuellement des fonctions de fixation de l'antenne 1 à un support (extrémité proximale) ou à un composant embarqué sur l'extrémité de l'antenne 1 (extrémité distale). Les figures illustrent, par exemple, une antenne radiofréquence 1 comprenant dix bagues.

Le diamètre d'une bague 2, qui détermine sensiblement le diamètre du cylindre (en configuration déployée comme en configuration gerbée), est compris entre 20mm et 500mm. Comme on peut le voir sur les figures 1 à 5, le diamètre de chaque bague est sensiblement identique en configuration gerbée et en configuration déployée.

L'objectif étant de réduire au minimum la hauteur e selon l'axe A de l'antenne radiofréquence 1 en configuration gerbée, selon une autre caractéristique, en configuration gerbée, deux bagues 2 immédiatement voisines sont en contact. Ceci est plus particulièrement visible à la figure 3.

En configuration déployée, la distance entre les bagues 2 est déterminée par le point de fixation sur ladite au moins une lame 3.

La longueur des portions de lames 3 reliant deux bagues 2 voisines est préférentiellement identique pour des questions de symétrie de l'antenne radiofréquence 1 et des efforts de déploiement.

En configuration déployée, la distance entre deux bagues 2 est comprise, par exemple, entre 10mm et 500mm. Cette distance est avantageusement constante tout au long de l'axe A de l'antenne radiofréquence 1.

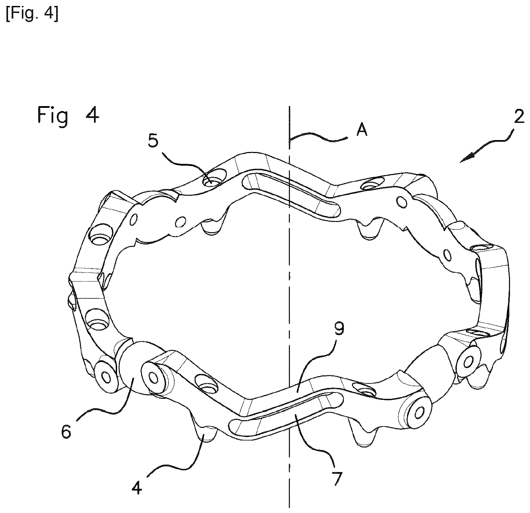

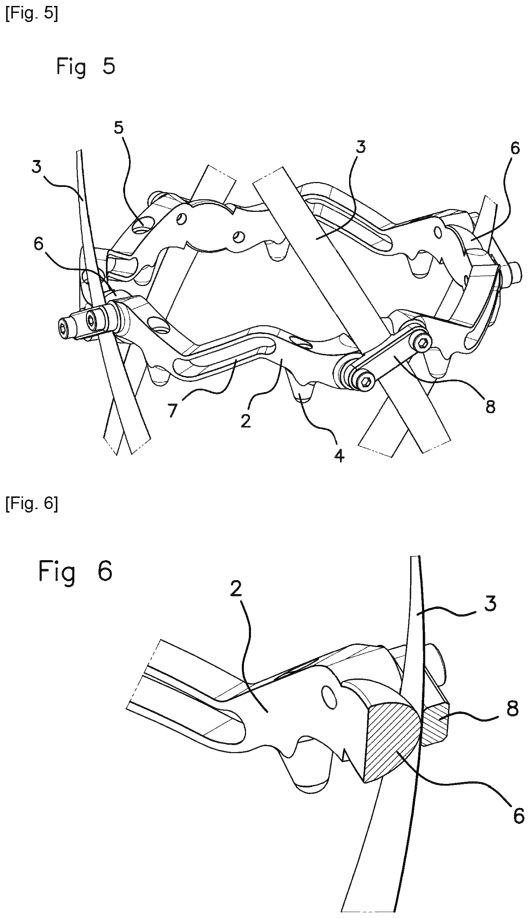

Selon une autre caractéristique, plus particulièrement visible aux figures 4 et 5, ladite au moins une bague 2 est conformée pour s'assembler avec sa voisine, en configuration gerbée. Ainsi, une bague 2 comprend, sur une première surface, en regard d'une autre bague, au moins un ergot 4 sortant vers ladite bague en regard. Cet ergot 4 est sensiblement cylindrique d'axe sensiblement parallèle à l'axe A du cylindre.

Le nombre d'ergots 4 peut être quelconque. Avantageusement, en cas de pluralité d'ergots 4, ceux-ci sont angulairement régulièrement répartis sur le pourtour de la bague 2. Pour des raisons de symétrie, cette répartition angulaire régulière reprend avantageusement celle des lames 3 avec un nombre d'ergots 4 multiple ou sous-multiple du nombre de lames 3.

De manière homologue, sur une deuxième surface opposée à la première surface, en regard d'une autre bague, la bague 2 comprend autant de logements 5 que la bague en regard comprend d'ergots 4. Chaque logement 5 est angulairement disposé de manière à pouvoir accueillir un ergot 4. Ceci implique une répartition angulaire similaire à celle des ergots 4, assortie d'une légère rotation induite lors du repliement du ou des portions de lames 3 entre les deux bagues 2, du fait de leur forme hélicoïdale. Aussi un logement 5 présente une forme complémentaire de la forme d'un ergot 4 homologue, soit sensiblement cylindrique ou préférentiellement conique, avec un tronc de cône ouvrant, au moins au niveau de l'ouverture d'entrée du logement 5, d'axe sensiblement parallèle à l'axe A du cylindre. Chaque logement 5 est apte à accueillir un ergot 4 de la bague 2 immédiatement voisine et en regard.

Alternativement, une même surface d'une bague 2 peut comprendre simultanément au moins un ergot 4 et au moins un logement 5, la bague voisine comprenant complémentairement un logement 5 homologue pour chaque ergot 4 et un ergot 4 homologue pour chaque logement 5.

La caractéristique précédente permet de solidariser intimement les bagues 2 lorsque l'antenne radiofréquence 1 est en configuration gerbée et de lui offrir ainsi une meilleure résistance mécanique, les assemblages ergot 4 / logement 5 permettant de reprendre les efforts subis par l'antenne 1.

Selon une autre caractéristique, plus particulièrement visible aux figures 4 et 5, une bague 2 comprend encore au moins une partie amincie 7. Un tel amincissement 7 est par exemple réalisé par une lumière percée selon une direction radiale. Cet amincissement permet avantageusement de réduire la raideur tangentielle et flexionnelle de la bague 2, afin de permettre une déformation élastique de la bague 2. Ceci permet à la bague 2 d'être plus tolérante aux efforts subis par l'antenne 1 en offrant la possibilité de se déformer pour absorber lesdits efforts.

Pour réaliser le même effet, cet amincissement 7, peut encore avantageusement être remplacé ou complété par une section en pente 9, relativement au plan du tore. Une telle section en pente 9, en ce qu'elle présente une double angulation, autorise une déformation, selon une direction tangentielle au cylindre contenue dans le plan du tore.

Une combinaison d'un amincissement 7 et d'une section en pente 9 au même endroit, forme avantageusement un parallélogramme permettant une déformation parallèle.

Une lame 3 est fixée sur une bague 2 par tout moyen : rivetage, soudage, collage, moulage, surmoulage, etc. Selon le mode de réalisation illustrée par les figures, un moyen possible est un cavalier 8, enserrant la lame 3, pressé contre le reste de la bague 2, par exemple par vissage ou par pincement.

Selon une autre caractéristique, plus particulièrement visible aux figures 6 et 7, au droit de sa fixation avec une lame 3, une bague 2 présente une section 6 sensiblement hémicylindrique. Ledit demi-cylindre est sensiblement tangent au cylindre par l'intérieur de ce cylindre, et orienté sensiblement perpendiculaire à l'axe A du cylindre. Tel que plus particulièrement illustré à la figure 7, cette forme de section permet de guider la lame 3 lors de son repliement et de l'accompagner en configuration gerbée.

Il a été observé, lors d'essais de déploiement, une légère possibilité de glissement des lames 3 relativement aux bagues 2 au niveau de leur fixation mutuelle. Aussi, selon une autre caractéristique, une fixation bague 2 / lame 3 comprend avantageusement un moyen anti-glissement. Dans un exemple, le moyen anti-glissement (non représenté) est du type par pincement, disposé selon un axe normal au plan moyen d'une lame 3, afin de former une résistance à un cisaillement dans ledit plan.

Dans un autre exemple, le moyen anti-glissement (non représenté) est du type doigt et trou, disposé selon un axe normal au plan moyen d'une lame 3, afin de former une résistance à un cisaillement dans ledit plan. Un tel doigt peut être une vis, un rivet ou une goupille traversant la lame 3 ou de matière avec cette dernière et s'engageant dans un trou correspondant ménagé dans la bague 2.

Pour que cette antenne radiofréquence 1, apte à se déployer spontanément, puisse fonctionner en radiofréquence, il convient de respecter certains points. Il convient que les bagues 2 soient réalisées en matériau diélectrique, préférentiellement un matériau plastique, encore préférentiellement du PEEK. Les bagues 2 peuvent également être formées d'au moins un matériau composite, en particulier d'au moins un matériau composite à matrice polymère. Un tel matériau composite peut par exemple comprendre un renfort sous forme de fibres synthétiques choisies dans le groupe formé des fibres de verre ; des fibres de carbone ; des fibres métalliques ; des fibres de bore ; des fibres de béryllium ; des fibres céramiques (Al₂O₃, SiC, Si₃N₄, BeO... ) ; des fibres de polymères (notamment des fibres de polyamide, des fibres de polyester, des fibres de polyéthylène, des fibres acryliques, des fibres de polypropylène, des fibres de polyuréthane, des fibres d'aramide... ) et de leurs mélanges. De même, il convient que ladite au moins une lame 3 soit réalisée en matériau électriquement conducteur, préférentiellement un métal.

Comme on peut le voir sur les figures 1 à 7, les bagues 2 ne sont pas déformées élastiquement entre la configuration gerbée et la configuration déployée de l'antenne, leur diamètre restant sensiblement identique en configuration gerbée et en configuration déployée. Chaque bague 2 est donc plus rigide que chaque lame 3 (au moins en flexion autour d'un axe transversal à l'axe longitudinal de ladite lame). Une telle antenne radiofréquence 1 est particulièrement adaptée à une utilisation sur un engin spatial, tels une station orbitale ou un satellite. L'antenne radiofréquence 1 peut alors être stockée, en configuration gerbée, pendant tout le transport : lancement, mise en orbite, etc. Une fois l'engin spatial en place, l'antenne radiofréquence 1 peut être libérée. Elle rejoint alors spontanément, sous l'effet des forces de rappel créées au sein de ladite au moins une lame 3 lors du repliement, la configuration déployée. Ceci déploie aussi ladite au moins une lame 3 et donc l'élément rayonnant de l'antenne radiofréquence 1, plaçant ainsi l'antenne radiofréquence 1 en configuration opérationnelle.

L'invention concerne encore un engin spatial comprenant une telle antenne radiofréquence 1.

L'invention a été illustrée et décrite en détail dans les dessins et la description précédente. Celle-ci doit être considérée comme illustrative et donnée à titre d'exemple et non comme limitant l'invention à cette seule description.

### Liste des signes de référence

- 1 :: antenne radiofréquence,
- 2 :: bague,
- 3 :: lame,
- 4 :: ergot,
- 5 :: logement,
- 6 :: section hémicylindrique,
- 7 :: amincissement,
- 8 :: cavalier,
- 9 :: pente.

## Revendications

1. Antenne radiofréquence (1) sensiblement cylindrique selon un axe (A) avec au moins un élément rayonnant, comprenant une configuration gerbée présentant une extension réduite (e) selon l'axe (A) du cylindre et une configuration déployée présentant une extension augmentée (E) selon l'axe (A) du cylindre, ladite antenne étant apte à se déployer spontanément pour passer de la configuration gerbée à la configuration déployée, et comprenant au moins deux bagues (2) sensiblement toriques coaxiaux, le grand diamètre du tore définissant le diamètre du cylindre, superposées, les axes desdites au moins deux bagues toriques se confondant chacun avec l'axe (A) du cylindre alors que deux bagues toriques adjacentes étant en contact dans la configuration gerbée de l'antenne, ainsi qu'au moins une lame (3) élastiquement flexible fixée sensiblement à la périphérie extérieure desdites au moins deux bagues (2), dans lequel ladite au moins une lame (3) est conformée pour, en configuration déployée de l'antenne, s'étendre le long du cylindre selon un axe parallèle ou confondu avec l'axe (A) du cylindre et, en configuration gerbée de l'antenne, se replier sur elle-même sous contrainte, de manière à créer un effort de rappel, permettant le déploiement spontané et en ce que chaque bague (2) présente un diamètre sensiblement identique en configuration gerbée et en configuration déployée, **caractérisée en ce que** lorsque l'antenne (1) est repliée en configuration gerbée, ladite au moins une lame (3) est contrainte sensiblement continûment et est disposée à l'intérieur du cylindre.

2. Antenne radiofréquence (1), selon la revendication précédente, dans laquelle ladite au moins une lame (3) forme l'élément rayonnant de l'antenne radiofréquence (1).

3. Antenne radiofréquence (1), selon l'une quelconque des revendications précédentes, dans laquelle ladite au moins une lame (3) présente une section (S) continue de forme incurvée et de concavité tournée vers l'intérieur du cylindre, afin d'assurer un auto-maintien dynamique de la configuration déployée.

4. Antenne radiofréquence (1), selon l'une quelconque des revendications 1 et 2, dans laquelle ladite au moins une lame (3) présente une section (S) avec rupture de courbe comprenant un ou plusieurs morceaux courbes ou plusieurs portions rectilignes non colinéaires entre elles.

5. Antenne radiofréquence (1), selon l'une quelconque des revendications précédentes, dans laquelle ladite au moins une lame (3) est réalisée monobloc depuis la première bague (2) jusqu'à la dernière bague (2), sur toute la longueur du cylindre.

6. Antenne radiofréquence (1), selon l'une quelconque des revendications 1 à 4, dans laquelle ladite au moins une lame (3) est réalisée en une pluralité de tronçons de lame depuis la première bague (2) jusqu'à la dernière bague (2), sur toute la longueur du cylindre.

7. Antenne radiofréquence (1), selon l'une quelconque des revendications précédentes, comprenant plusieurs lames (3) régulièrement réparties angulairement.

8. Antenne radiofréquence (1), selon l'une quelconque des revendications précédentes, comprenant quatre lames (3).

9. Antenne radiofréquence (1), selon l'une quelconque des revendications précédentes, dans laquelle au moins une des bagues (2) comprend sur une première surface au moins un ergot (4) sensiblement cylindrique d'axe sensiblement parallèle à l'axe (A) du cylindre et, sur une deuxième surface opposée à la première surface, au moins autant de logements (5) sensiblement cylindriques ou préférentiellement coniques, d'axe sensiblement parallèle à l'axe (A) du cylindre, chaque logement (5) étant apte à accueillir un ergot (4) de la bague (2) immédiatement voisine et en regard.

10. Antenne radiofréquence (1), selon l'une quelconque des revendications précédentes, dans laquelle au moins une des bagues (2) comprend encore au moins une partie amincie selon une direction radiale, afin de permettre une déformation élastique de la bague (2).

11. Antenne radiofréquence (1), selon l'une quelconque des revendications précédentes, dans laquelle au moins une des bagues (2) présente, au droit de la fixation avec une lame (3), une section (6) sensiblement hémicylindrique, sensiblement tangente au cylindre par l'intérieur et d'axe sensiblement perpendiculaire à l'axe (A) du cylindre, de manière à guider la lame (3) lors de son repliement.

12. Antenne radiofréquence (1), selon l'une quelconque des revendications précédentes, dans laquelle une fixation bague (2) / lame (3) comprend un moyen anti-glissement, préférentiellement du type par pincement.

13. Antenne radiofréquence (1), selon l'une quelconque des revendications précédentes, dans laquelle lesdites au moins deux bagues (2) sont en matériau diélectrique, préférentiellement un matériau plastique, encore préférentiellement du polyétheréthercétone, PEEK, et ladite au moins une lame (3) est en matériau électriquement conducteur, préférentiellement un métal.

14. Engin spatial **caractérisé en ce qu'**il comprend une antenne radiofréquence (1) selon l'une quelconque des revendications précédentes.]

## Patentansprüche

1. Hochfrequenzantenne (1), die im Wesentlichen zylindrisch entlang einer Achse (A) ist, mit mindestens einem Strahlungselement, umfassend eine gestapelte Konfiguration, die eine reduzierte Erstreckung (e) entlang der Achse (A) des Zylinders aufweist, und eine entfaltete Konfiguration, die eine vergrößerte Erstreckung (E) entlang der Achse (A) des Zylinders aufweist, wobei die Antenne in der Lage ist, sich spontan zu entfalten, um von der gestapelten Konfiguration zu der entfalteten Konfiguration überzugehen, und mindestens zwei übereinander liegende im Wesentlichen torische koaxiale Ringe (2) umfasst, wobei der große Durchmesser des Torus den Durchmesser des Zylinders definiert, wobei die Achsen der mindestens zwei torischen Ringe jeweils mit der Achse (A) des Zylinders zusammenfallen, während zwei benachbarte torische Ringe in der gestapelten Konfiguration der Antenne in Kontakt sind, sowie mindestens einen elastisch flexiblen Streifen (3), der im Wesentlichen an dem äußeren Umfang der mindestens zwei Ringe (2) befestigt ist, wobei der mindestens eine Streifen (3) so geformt ist, dass er sich in der entfalteten Konfiguration der Antenne entlang des Zylinders entlang einer Achse erstreckt, die parallel zu der Achse (A) des Zylinders verläuft oder mit ihr zusammenfällt, und in der gestapelten Konfiguration der Antenne unter Belastung zusammengefaltet ist, so dass eine Rückstellkraft erzeugt wird, die das spontane Entfalten ermöglicht, und wobei jeder Ring (2) in der gestapelten Konfiguration und in der entfalteten Konfiguration einen im Wesentlichen identischen Durchmesser aufweist, **dadurch gekennzeichnet, dass**, wenn die Antenne (1) in der gestapelten Konfiguration zusammengefaltet ist, der mindestens eine Streifen (3) im Wesentlichen durchgehend belastet wird und im Inneren des Zylinders angeordnet ist.

2. Hochfrequenzantenne (1) nach dem vorhergehenden Anspruch, wobei der mindestens eine Streifen (3) das Strahlungselement der Hochfrequenzantenne (1) bildet.

3. Hochfrequenzantenne (1) nach einem der vorhergehenden Ansprüche, wobei der mindestens eine Streifen (3) einen durchgehenden Querschnitt (S) mit gekrümmter Form und zur Innenseite des Zylinders gewandter Konkavität aufweist, um eine dynamische Selbsthaltung der entfalteten Konfiguration zu gewährleisten.

4. Hochfrequenzantenne (1) nach einem der Ansprüche 1 und 2, wobei der mindestens eine Streifen (3) einen Querschnitt (S) mit Knick aufweist, der ein oder mehrere gekrümmte Stücke oder mehrere geradlinige Abschnitte umfasst, die untereinander nicht kollinear sind.

5. Hochfrequenzantenne (1) nach einem der vorhergehenden Ansprüche, wobei der mindestens eine Streifen (3) von dem ersten Ring (2) bis zu dem letzten Ring (2) über die gesamte Länge des Zylinders einstückig ausgeführt ist.

6. Hochfrequenzantenne (1) nach einem der Ansprüche 1 bis 4, wobei der mindestens eine Streifen (3) von dem ersten Ring (2) bis zu dem letzten Ring (2) über die gesamte Länge des Zylinders aus einer Vielzahl von Streifensegmenten ausgeführt ist.

7. Hochfrequenzantenne (1) nach einem der vorhergehenden Ansprüche, die mehrere winklig regelmäßig verteilte Streifen (3) umfasst.

8. Hochfrequenzantenne (1) nach einem der vorhergehenden Ansprüche, die vier Streifen (3) umfasst.

9. Hochfrequenzantenne (1) nach einem der vorhergehenden Ansprüche, wobei mindestens einer der Ringe (2) auf einer ersten Fläche mindestens eine im Wesentlichen zylindrische Nase (4) mit einer im Wesentlichen parallel zu der Achse (A) des Zylinders verlaufenden Achse und, auf einer zu der ersten Fläche entgegengesetzten zweiten Fläche, mindestens ebenso viele im Wesentlichen zylindrische oder bevorzugt konische Aufnahmen (5) mit einer im Wesentlichen parallel zu der Achse (A) des Zylinders verlaufenden Achse umfasst, wobei jede Aufnahme (5) in der Lage ist, eine Nase (4) des unmittelbar benachbarten und gegenüberliegenden Rings (2) aufzunehmen.

10. Hochfrequenzantenne (1) nach einem der vorhergehenden Ansprüche, wobei mindestens einer der Ringe (2) ferner mindestens einen entlang einer radialen Richtung verdünnten Teil umfasst, um eine elastische Verformung des Rings (2) zu ermöglichen.

11. Hochfrequenzantenne (1) nach einem der vorhergehenden Ansprüche, wobei mindestens einer der Ringe (2), an der Befestigung mit einem Streifen (3), einen im Wesentlichen halbzylindrischen Querschnitt (6) aufweist, der den Zylinder im Wesentlichen von innen tangiert und eine im Wesentlichen senkrecht zu der Achse (A) des Zylinders verlaufende Achse besitzt, so dass der Streifen (3) bei seinem Zusammenfalten geführt wird.

12. Hochfrequenzantenne (1) nach einem der vorhergehenden Ansprüche, bei der eine Befestigung Ring(2) / Streifen (3) ein Gleitverhinderungsmittel aufweist, bevorzugt vom Typ durch Klemmung.

13. Hochfrequenzantenne (1) nach einem der vorhergehenden Ansprüche, wobei die mindestens zwei Ringe (2) aus dielektrischem Material, bevorzugt einem Kunststoff, noch bevorzugter Polyetheretherketon, PEEK, sind und der mindestens eine Streifen (3) aus elektrisch leitfähigem Material, bevorzugt einem Metall, ist.

14. Raumfahrzeug, **dadurch gekennzeichnet, dass** es eine Hochfrequenzantenne (1) nach einem der vorhergehenden Ansprüche umfasst.

## Claims

1. Radiofrequency antenna (1) that is substantially cylindrical along an axis (A) with at least one radiating element, comprising a stacked configuration having a reduced extension (e) along the axis (A) of the cylinder and a deployed configuration having an increased extension (E) along the axis (A) of the cylinder, said antenna being able to deploy spontaneously to pass from the stacked configuration to the deployed configuration, and comprising at least two coaxial and substantially toric rings (2), the major diameter of the torus defining the diameter of the cylinder, which are superposed, the axes of said at least two toric rings each being coincident with the axis (A) of the cylinder while two adjacent toric rings are in contact in the stacked configuration of the antenna, and at least one elastically flexible blade (3) fastened substantially at the outer periphery of said at least two rings (2), wherein said at least one blade (3) is shaped to, in the deployed configuration of the antenna, extend along the cylinder along an axis parallel to or coincident with the axis (A) of the cylinder and, in the stacked configuration of the antenna, fold up on itself under stress, so as to create a return force, allowing the spontaneous deployment, and in that each ring (2) has a diameter that is substantially identical in the stacked configuration and in the deployed configuration, **characterized in that**, when the antenna (1) is folded up in the stacked configuration, said at least one blade (3) is stressed substantially continuously and is disposed inside the cylinder.

2. Radiofrequency antenna (1) according to the preceding claim, wherein said at least one blade (3) forms the radiating element of the radiofrequency antenna (1).

3. Radiofrequency antenna (1) according to either one of the preceding claims, wherein said at least one blade (3) has a continuous section (S) of curved shape and of concavity turned towards the inside of the cylinder, in order to ensure dynamic self-maintenance of the deployed configuration.

4. Radiofrequency antenna (1) according to either one of Claims 1 and 2, wherein said at least one blade (3) has a section (S) with a break in curvature comprising one or more curved pieces or a plurality of rectilinear portions that are not collinear with each other.

5. Radiofrequency antenna (1) according to any one of the preceding claims, wherein said at least one blade (3) is produced in one piece from the first ring (2) to the last ring (2), along the entire length of the cylinder.

6. Radiofrequency antenna (1) according to any one of Claims 1 to 4, wherein said at least one blade (3) is produced as a plurality of blade segments from the first ring (2) to the last ring (2), along the entire length of the cylinder.

7. Radiofrequency antenna (1) according to any one of the preceding claims, comprising a plurality of blades (3) that are evenly angularly distributed.

8. Radiofrequency antenna (1) according to any one of the preceding claims, comprising four blades (3).

9. Radiofrequency antenna (1) according to any one of the preceding claims, wherein at least one of the rings (2) comprises, on a first surface, at least one substantially cylindrical lug (4) of axis substantially parallel to the axis (A) of the cylinder and, on a second surface opposite the first surface, at least as many substantially cylindrical or preferentially conical housings (5), of axis substantially parallel to the axis (A) of the cylinder, each housing (5) being able to accommodate a lug (4) of the immediately neighbouring and facing ring (2) .

10. Radiofrequency antenna (1) according to any one of the preceding claims, wherein at least one of the rings (2) also comprises at least one part that is thinned in a radial direction, in order to allow elastic deformation of the ring (2).

11. Radiofrequency antenna (1) according to any one of the preceding claims, wherein at least one of the rings (2) has, in line with the fastening with a blade (3), a substantially semicylindrical section (6), substantially tangent to the cylinder via the inside and of axis substantially perpendicular to the axis (A) of the cylinder, so as to guide the blade (3) during the folding up thereof.

12. Radiofrequency antenna (1) according to any one of the preceding claims, wherein a ring (2)/blade (3) fastening comprises an anti-slip means, preferentially of the pinching type.

13. Radiofrequency antenna (1) according to any one of the preceding claims, wherein said at least two rings (2) are made of dielectric material, preferentially a plastic material, even more preferentially polyether ether ketone, PEEK, and said at least one blade (3) is made of electrically conductive material, preferentially a metal.

14. Spacecraft, **characterized in that** it comprises a radiofrequency antenna (1) according to any one of the preceding claims.
